# EUROPEAN PATENT APPLICATION

(11) **EP 0 843 266 A2**
(43) Date of publication of application: **20.05.1998**
(21) Application number: 97309168.9
(22) Date of filing: 14.11.1997
(51) Int. Cl.: G06F 17/24

(54) **Dynamic incremental updating of electronic documents**

(30) Priority: 18.11.1996 US 751573
(71) Applicant: Adobe Systems, Inc., San Jose, California 95110 (US)
(72) Inventor: Perez De Lara, Bernardo, Fremont, California 94539 (US); Perelman, Roberto, Sunnyvale, California 94087 (US); Orthlieb, Carl W., Mountain View, California 94043 (US); Malloy, Thomas J., Portola Valley, California 94028 (US)
(74) Representative: Wombwell, Francis

(57) **Abstract**

A computer-implemented method and apparatus redefining an electronic document displayed to a user by a viewer. The method includes displaying an electronic document having information content and formatting information defining a predetermined final format for the appearance of the document when displayed, where the document has one or more fields; receiving an update to the electronic document in response to a request initiated at the viewer, the update including data for modifying one or more fields in the electronic document; importing the update to redefine the electronic document; and displaying the redefined document. Preferred embodiments have the following features. The update includes a redefinition of information content or of formatting information of the electronic document. The request is directed to a server and the server generates the update in response to the request and transmits the update to the viewer. The request is directed to a process running on the computer with the viewer and the process generates the update in response to the request and provides the update to the viewer. The method also includes receiving from a user input data for one or more fields of the electronic document; redefining the electronic document to include the input data as field values; and including the input data in the request.

## Description

### Background

The present invention relates generally to the rendering and display of electronic documents, and more particularly to apparatus and methods for displaying electronic documents such as forms with which a user interacts, and most particularly to such apparatus and methods where the user interacts directly with client programs on a client computer and services are provided by server programs on a server computer linked to the client computer by a network connection.

An electronic document is a named, structural unit containing content such as text, graphics and image data. An electronic document can be stored, retrieved, displayed, and exchanged as a separate unit by users on computers. The Acrobat™ family of products from Adobe Systems Incorporated, of San Jose, California, enables a user to create, modify, exchange, and view electronic documents in a platform-independent way. Acrobat makes use of a document description language (DDL) called Portable Document Format (PDF) which describes a document in a portable manner independent of the application software, hardware, and operating system used to create it. A PDF file includes a PDF document having one or more pages. Each page in the document may contain any combination of text, graphics, and images in a device and resolution independent format.

One common example of a document exchange that arises in a distributed computing environment is the transmission of a form document to a client by a server for a user to fill in the blanks and then return the form (or form data) to the server for processing. Forms are electronic documents that contain one or more fields that are adapted to receive data entered by a user or are otherwise responsive to user actions. For example, a user wishing to place an order or register on a World Wide Web site often is required to fill out a form for submission to the server (the site). Typically, the user fills out the form, adding the requested information, and submits the form to the server for processing. The server evaluates the data received in the submission and may respond by transmitting a new document (which itself may be a form) back to the client. This process may repeat numerous times depending on the nature of the transaction.

Often, the document sent to a user in response to a submission is a modification of the form that was sent to the user originally. The new form may include new or modified fields, requiring the user to submit more information, or providing more information to the user. For example, a registration form received from a vendor may request the user to provide a name, address, and other personal information. Having this information, the vendor may desire to personalize further communications to the user by including portions of the personal information (such as the user's name) in each document returned to the user. Accordingly, each document returned to the client for display to the user may include a number of common fields coupled with one or more new fields at each transfer.

In the past, the submission of form data from a client to a server could be accomplished in a number of ways. The client could submit the entire form to the server for processing, or alternatively, submit only the form data. However, the options on the server side were more limited. Typically, the response to a form submitted by a client was the transfer of an entire document back to the client. This was the case even when the form transferred from the server was itself a modified version of the form the client already had. Accordingly, resources were often wasted in the transmission of the complete form back to the client.

### Summary

In general, in one aspect, the invention features a computer-implemented method redefining an electronic document displayed to a user by a viewer. The method includes displaying an electronic document having information content and formatting information defining a predetermined final format for the appearance of the document when displayed, where the document has one or more fields; receiving an update to the electronic document in response to a request initiated at the viewer, the update including data for modifying one or more fields in the electronic document; importing the update to redefine the electronic document; and displaying the redefined document. Preferred embodiments of the invention include one or more of the following features. The update includes a redefinition of information content or of formatting information of the electronic document. The request is directed to a server and the server generates the update in response to the request and transmits the update to the viewer. The request is directed to a process running on the computer with the viewer and the process generates the update in response to the request and provides the update to the viewer. The method also includes receiving from a user input data for one or more fields of the electronic document; redefining the electronic document to include the input data as field values; and including the input data in the request. A user interface gesture initiates the request. The data in the update includes data of one or more types, where the types selected from the group consisting of data to modify an existing field in the electronic document, data to add a field to the electronic document, and data to delete a field from the electronic document. An attribute is associated with a field, and the data in the update changes the attribute. The attribute is selected from the group consisting of value, visual appearance, action, and position. The data in the update includes document description in the PDF document description language. The data in the update modifies less than all of the fields of the electronic document. The electronic document is a fully self-contained definition of its information content and appearance.

In general, in another aspect, the invention features a computer-implemented method providing services to a user through an electronic document. The method includes transmitting an electronic document to a viewer running on a computer for display to a user, the electronic document having information content and formatting information defining a predetermined final format for the appearance of the document when displayed; receiving a request; generating an update to the electronic document in response to the request; and transmitting the update to the viewer, so that the viewer may import the update and display an updated document to the user.

In general, in another aspect, the invention features a computer program, tangibly stored on a computer-readable medium, comprising instructions for causing a server computer to transmit an electronic document to a viewer running on a second, client computer for display to a user, the electronic document having information content and formatting information defining a predetermined final format for the appearance of the document when displayed; to receive a request from the viewer; to generate an update to the electronic document in response to the request; and to transmit the update to the viewer, so that the viewer may import the update and display an updated document to the user. Preferred embodiments of the invention include one or more of the following features. The update includes a redefinition of information content of the electronic document. The update includes a redefinition of formatting information of the electronic document. The update includes data modifying an action of a field of the electronic document. The update includes data modifying an annotation of a field of the electronic document.

Among the advantages of the invention are one or more of the following. A document displayed on a client may be redefined based on change information received from a server resulting in the display of a new document without requiring the transfer of the entire new document from the server to the client. A user may define a personal profile in the form of a document update that may be applied to electronic documents in a platform and document independent fashion.

Other advantages and features will be apparent from the following description and claims.

### Brief Description of the Drawings

Figure 1 is a schematic diagram of a computer system to view and modify an electronic document

Figure 2 is a illustrative view of an interactive form.

Figure 3 is a schematic diagram of the hierarchy of fields in the interactive form of Figure 2.

Figure 4 is a schematic diagram of a field object from the interactive form of Figure 2.

Figure 5 is a flow chart illustrating the process of the present invention.

Figure 6 is a schematic diagram of an update.

Figure 7 is a flow chart illustrating the step of importing an update.

### Detailed Description

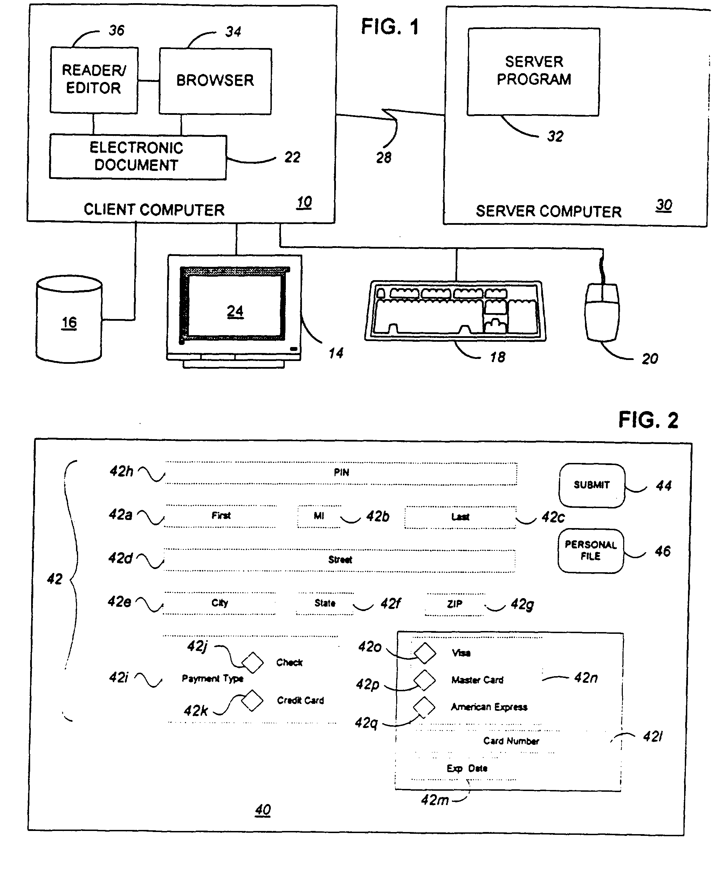

Referring to Figure 1, a client computer system 10 runs programs enabling a user of the system to view, modify, and otherwise interact with an electronic document. The client system 10 includes a digital computer 12 (such as a personal computer or a workstation), a display 14, a mass storage device 16 (such as a floppy disk drive, a hard disk drive, a CD-ROM drive, or magneto-optical disk drive), a keyboard 18, and a mouse 20 or other pointer device (such as an input tablet). The computer 12 is of conventional construction and includes the customary components (not shown), such as a microprocessor, a memory, a peripheral bus, and a memory bus. The computer 12 also includes communications hardware and programs (not shown) by which the client computer system 10 is connected to a communications link 28.

The client computer system 10 is programmed to store an electronic document 22 in an internal format and to display all or a portion of it on the display 14. This programming is provided by a viewer program 36, such as the Acrobat™ program available from Adobe Systems Incorporated of San Jose, California. One viewer program suitable for application of the present invention is the Acrobat™ reader, described in commonly-owned United States patent applications number 08/569,000 and 08/693,489, the disclosures of which are incorporated here by this reference. The viewer program 36 may communicate through a plug-in link to a browser program 34. One suitable browser is the NetScape Navigator™ browser, available from NetScape Communications Corporation of Mountain View, California.

In operation, the client computer system 10 is coupled by a link 28 to a server system 30, which runs server software 32. The link 28 may be a simple, direct connection between the two systems, or it may be some kind of network connection, such as a connection through the Internet. The browser 34 can retrieve or download electronic documents from the server system 30 over the link 28, or it can retrieve such documents from a local resource on the client computer system 10, such as mass storage device 16.

The portable electronic document 22 is a collection of data that can be viewed and manipulated on a variety of different computer systems while maintaining the appearance intended by the publisher. The electronic document 22 is organized and stored in a "document file". The document file can be a storage unit such as a file, data structure, or the like, and can be located on a single computer or distributed across the computer network 38.

In the implementation described below, the portable electronic document is described as stored in the Portable Document Format (PDF) by Adobe Systems Incorporated. However, the invention may also be applicable to documents stored in other languages and other formats, such as Hyper Text Markup Language (HTML). Many of the steps or processes described are specific to the implementation, and can be changed or omitted if other languages or formats are used.

The electronic document 22 is organized as a collection of objects. An "object" is a logical software unit comprising data and methods that operate on the data to give it capabilities and attributes. Examples of object types used in a typical PDF file include pages, text blocks, graphical objects (such as lines or polygon shapes), images (such as bitmaps), fonts, and user-specific objects. An object may generate an image on a display according to its type and attributes. For example, a text object may include a string of text, the position of the text on the display, the font, size, and color of the text, and whether to display a border surrounding the text. Some attributes may themselves be objects that can be shared by other objects. For example, several text objects may refer to the same font object. The present invention introduces several new types of objects, including fields, annotations, and actions, which will be discussed below. The fields, annotations and actions are objects consistent with previous versions of the PDF file format, described in Portable Document Format Reference Manual, Adobe Systems, Inc., Addison-Wesley Publishing Company, New York, 1993, incorporated by reference in its entirety.

Referring to Figure 2, an electronic document may include a fill-in form such as the illustrated interactive form 40. The interactive form 40 has a collection of fields 42 for the user to complete. For example, the form 40 includes fields for a first name 42a, a middle initial 42b, a last name 42c, a street address 42d, a city 42e, a state 42f, a zip code 42g, and a personal identification number 42h. The form 40 also includes a field 42i for a payment type. Some of the fields (e.g., fields 42a-42h) are text fields, i.e., locations for the user to type in text, whereas other fields (e.g., field 42i) are radio buttons, pop-up choice lists, or check boxes. Each field that is displayed has associated with it an annotation that controls the appearance of the field when the document is displayed.

In addition, the form 40 includes a submit button 44 and a personal information button 46. These are annotations that may be selected by a user to cause actions.

In general, fields are used to store values that may be set by the user. Each field has a type, such as button or text, a name, and a value. An object is identified as a field by having the field key in the object.

Annotations are used to display fields. An object may be both an annotation and a field. If it is, the object has the attributes of both. An object may be identified as an annotation by having the annotation key in the object.

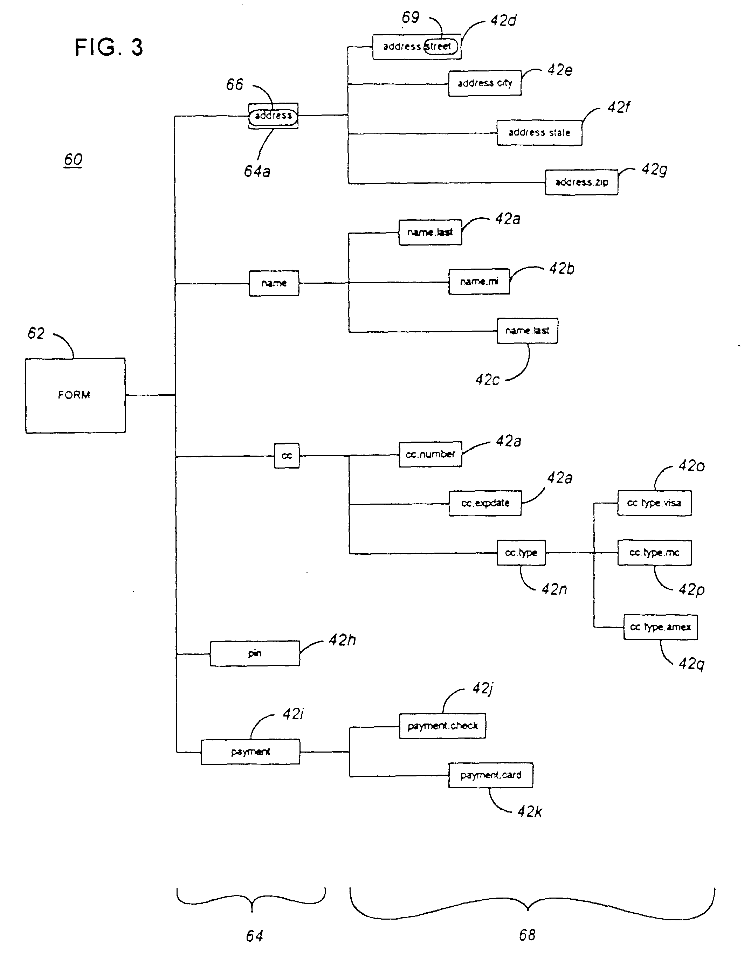

Referring to Figure 3, each field 42 has a place in a field hierarchy 60. The presence of the field hierarchy 60 is indicated by a flag in the catalog object of the electronic document, such a keyword and a pointer to a form object 62. The form object 62 contains an array listing each root field 64. Root fields are fields that are not children of other field objects. Each root field contains a partial field name 66. In addition, each root field 64 may refer to additional child fields 68, and each child field 68 may have its own partial field name 69. The fully qualified field name for any field 63 is formed by concatenating the partial fields names of the child field and all of its ancestor fields and using a "." as a separator between each partial field name. Attributes of a child field may be inherited from its parent or ancestors.

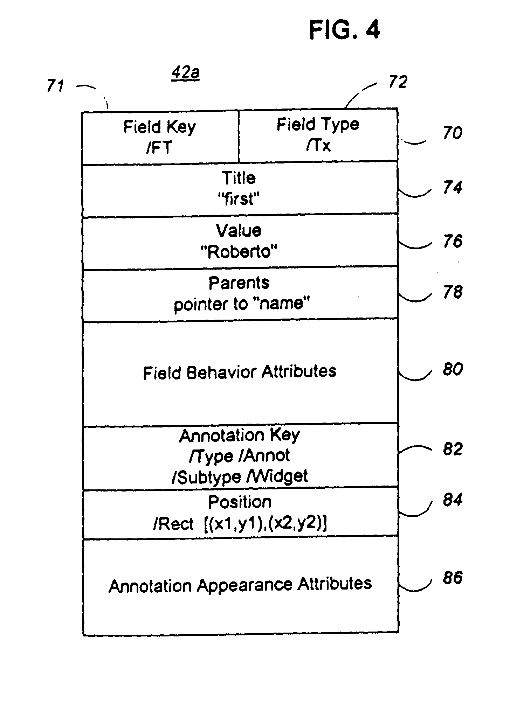

The format of an object, such as the first name field 42a, which is both a field and an annotation, is shown in Figure 4. The field object 42a includes a key 70 having a key name 71 to indicate that the object is a field and a value 72 to define the type of the field. Field object 42a is a text field. The field object 42a has a partial field name 74 ("first") , a value 76 ("Roberto"), and a pointer 78 to the parent field ("name"). The field 42a may have other field behavior attributes 80, such as being a read-only field, that will be described below. In addition, the field object 42a includes a key 82 that indicates that the object is also an annotation. The field 42a has a position 84, e.g., two coordinates defining the upper left-hand and lower right-hand corners of the rectangle in which the field 42a appears. The field 42a may have other annotation appearance attributes 86, such as color or font, that will be described below.

The attributes of fields may include those listed in the table below:

| *Key* | *Types* | *Semantics* |
|---|---|---|
| FT | name | (*Required, inheritable*) This key indicates that the object is a field, and the value of the key defines the type of field. Valid field types include: |
| | Btn | Button field. This field type is used for a checkbox, i.e., a field that toggles between two states. This field type is also used for a radio button, i.e., a field made up of an arbitrary number of toggles, only one of which can be on at any given time. It is also used for a push button, i.e., an interactive element that can trigger an action or change appearance but retains no value. |
| | Tx | Text field. A field whose value is text. |
| | Ch | Choice field. This field type allows the user to select one value from an arbitrary list. The list is presented to the user as a pop-up list or a scrollable list. |
| T | string | *(Optional)* The partial field name of the field. The fully qualified field name is derived from the partial field name by concatenating the partial field names of the field object and each ancestor. |
| V | various | *(Optional, inheritable)* The value. The format of the value is dependent on the type of the field as specified by the FT attribute. |
| DA | string | (*Required for text fields, inheritable*) Default appearance for text. This string contains a sequence of page-content graphics or text-state operators that the determine appearance properties such as text color, text size, etc. |
| DR | dictionary | (*Required for text fields, inheritable*) Default resources. For any field which includes text, this key is used to create a resource dictionary. The dictionary must contain a font resource. |
| DV | various | *(Optional, inheritable*) The default value. The field reverts to this value upon a ResetForm action. |
| MaxLen | integer | (*Optional, inheritable*) For a text field, this attribute determines the maximum number of characters. |
| OH | integer | (*Optional, inheritable*) Original height. This key determines the height of the bounding box attribute of the appearance stream. The default is the same as the height of the rectangle attribute. |
| Opt | array | *(Required for choice fields, inheritable)* The options in a choice field. Each element in the array is an item in the list. The /V attribute determines the item selected from the list. |
| Q | integer | *(Optional, inheritable)* Quadding. This key determines whether text input is left-justified (0), centered (1) or right-justified (2). The default value is 0. |
| TopIndex | integer | *(Optional, inheritable)* For a scrollable choice field, this attribute determines the first visible item in the list. |
| Ff | integer | *(Optional, inheritable*) Flags. The binary value of the integer is interpreted as a collection of flags that define various characteristics of the field. The default value is zero. This attribute may include the following flags: |
| Ff | bit 1 | *Read-only* flag, indicating that the user is not allowed to change the field value in the viewer. This key is intended for use with computed fields or fields that are imported from a database. |
| Ff | bit 2 | *Required* flag, indicating that this field must have a value at the time the field is exported by a Submit action. |
| Ff | bit 3 | *No-export* flag, indicating that this field must not be exported by a Submit action. |
| Ff | bit 13 | *Multi-line* flag, indicating that a text field may have multiple lines. |
| Ff | bit 14 | *Password* flag, indicating whether keyboard input to a text field is displayed on the screen. Rather the input is replaced by a benign feedback, such as an asterisk for each input character. This flag may be used to preserve confidentiality of password fields. |
| If | bit 15 | *No null state* flag, indicating that, for a radio button field, any action that would put all the checkboxes in an "off" state is ignored. |
| If | bit 16 | *Radio* flag, indicating whether a button field is a radio button or a checkbox. This flag is meaningful only if the push-button flag is false. |
| Ff | bit 17 | *Push-button* flag, indicating that a button field is "purely interactive"; i.e., the button responds to user input but does not change state as a result of the input. |
| Ff | bit 18 | *Pop-up* flag, indicating whether a choice field is a list box or a pop-up box. |
| If | bit 19 | *Edit* flag, indicating that a user may input a string into the field of a choice field, rather than selecting it from the pre-defined list. |
| Ff | bit 20 | *Sort* flag, included for use by form-authoring tools that need to keep track of the user's preference regarding the sort order of listed items. This flag is not used by the viewer. |
| Kids | array | *(Optional)* The Kids and Parent attributes define the child/parent relationship between fields. The Kids array contains references to the children of this field. A child may be referenced from only one Kids array and thus has a unique parent. |
| | | A field may use a Kids array to reference related fields with different values. For example, a parent field 64a (Figure 3) whose T key is (Address) may have child fields 42d and 42e whose T keys are (Street) and (City), respectively. Each child field has a prefix that is the fully qualified field name of the parent field. |
| | | A field may also use a Kids array to reference child fields that differ from the parent field only in their appearance, and not in their value. Such child fields may be used to display the same parent |
| | | field in multiple locations. To do this, the child does not specify a T attribute and inherits the FT, V, and DV attributes. |
| Parent | dictionary | *(Required if this field is referenced from another field's* Kids array) The parent field. |

The attributes of annotations may include those listed in the table below:

| *Key* | *Type* | *Semantics* |
|---|---|---|
| Type | name | (*Optional*) Object type. Always Annot. |
| Subtype | name | (*Required*) Annotation subtype. For an annotation that is also a field, the annotation subtype is Widget. |
| Rect | Rectangle | *(Required)* Rectangle specifying the location of the annotation. |
| F | integer | *(Optional)* Flags. The binary value of the integer is interpreted as a collection of flags that define various characteristics of the annotation. The default is zero. |
| | bit 1 | *Invisible* flag, indicating how an annotation is displayed when the corresponding annotation handler is not available. If this flag's value is 1, the annotation will not be displayed. If this flag's value is 0, the annotation will appear as an unknown annotation. |
| | bit 2 | *Hidden* flag, indicating whether the annotation is currently shown. If the value of this flag is 1, the annotation is hidden. If the annotation is hidden, there is no user interaction with, display of, or printing of the annotation. The ability to hide and show annotations selectively, combined with appearances (see the AP key), is especially useful in cases where screen real estate is limited. This flag can be used to display pop-up auxiliary data similar to online help systems. |
| | bit 3 | *Print* flag, indicating whether the annotation will be printed. This allows the author of a document to create an annotation for display purposes only. Such an annotations should display its appearance while in the viewer, but that appearance should not print. An example is push buttons 44 (see Figure 2), whose presence on a printed page would be distracting. |
| H | name | *(Optional)* Highlighting. This key controls the visual effect of clicking on a link annotation. |
| BS | dictionary | *(Optional)* Border. This key specifies attributes related to the border of the annotation. |
| A or AA | dictionary | *(Optional)* Actions. These attributes specify an action to be invoked in response to a gesture by the user directed at the object. Actions that may result in a request for service are listed below: |
| | GoTo | Change the current page view to a specified page and zoom factor. |
| | CoToR | ("GoTo Remote") Open another PDF file at a specified page and zoom factor. |
| | Launch | Launch an application, usually to open a file. |
| | Thread | Begin reading an article thread. |
| | URI | Resolve the specified Uniform Resource Identifier (URI). |
| | Sound | Play a sound. |
| | Movie | Play a movie. |
| | Set State | Store a value in the appearance-state (AS key) of an annotation's appearance dictionary. |
| | Hide | Set or clear the Hidden flag for an annotation. |
| | Named actions | execute an action predefined by the viewer. |
| | SubmitForm | Send data to a URI. |
| | ResetForm | Set field values to their defaults. |
| | ImportData | Import field values form a file. |
| AP | dictionary | *(Optional)* Appearance dictionary. In addition to color, highlighting and border, this key can specify one or more visual appearances that are available for the annotation. |
| AS | name | *(Required if more than one appearance is possible)* Appearance state. This key indicates which entry in the AP dictionary is to be used in each instance. This allows for the specification of objects, such as checkboxes and radio buttons, whose appearance may change. |

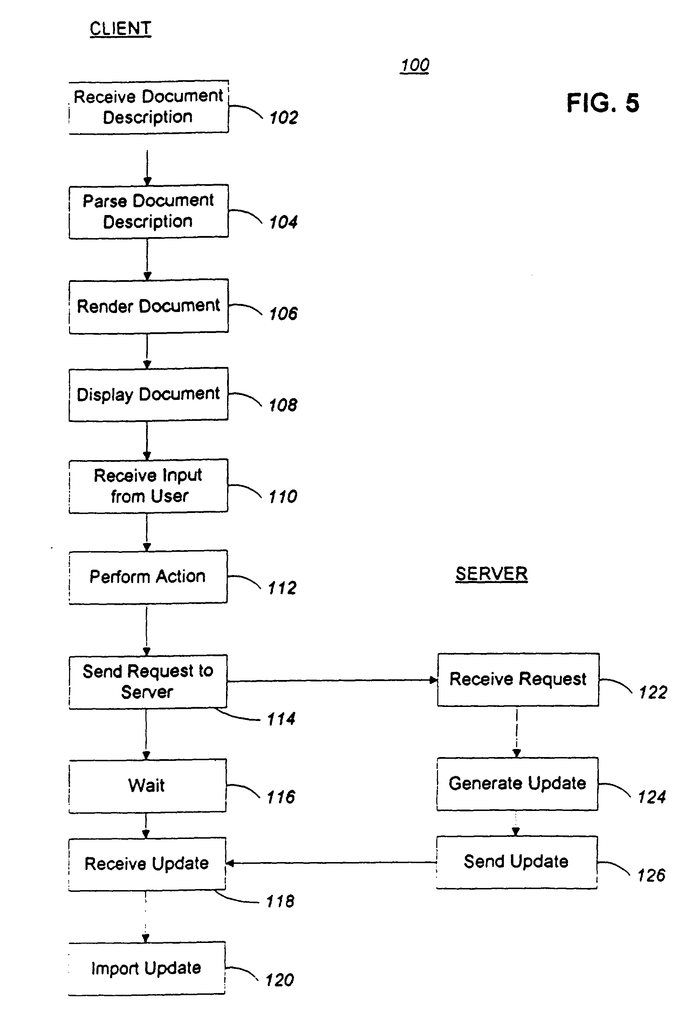

Figure 5 is a flow diagram illustrating a process 100 incrementally modifying an electronic document in the course of interaction with a user who interacts with the document through a viewer on a computer. First, the viewer receives the electronic document (step 102). In the example embodiment being described, the electronic document is a portable, platform-independent PDF file. The electronic document is received in a document language that is device-independent. The viewer parses the electronic document (step 104) to create an internal data structure, and then renders it to create the visual appearance of the document (step 106) for the particular display device being used.

The user may generate a request by making a user interface gesture directed to the document. Such a gesture causes an object in the electronic document to produce an action. An author may assign an action to an object by adding the appropriate attribute key. Gestures that may trigger an action include moving a cursor over an object, moving a cursor off an object, depressing the mouse button, releasing the mouse button, opening a new page, and closing a page.

In response to receiving a request from the user, the viewer initiates a request for service (step 112). This request may be directed to a server, such as the server software 32 on server computer system 30 (Figure 1).

The viewer sends the request to the server (step 114). After sending the request, the viewer waits to receive a response (step 116). Multiple requests may be made, and the viewer may undertake other tasks while waiting.

Eventually the viewer will receive a response, in the form of an update, from the server (step 118). The update is in a device-independent format, and, advantageously, has the same file structure, the same syntax, and the same basic object types as the electronic document. However, the update will be much simpler because only objects that are modified or added need be included in the update. Finally, the viewer imports the update into the electronic document (step 120).

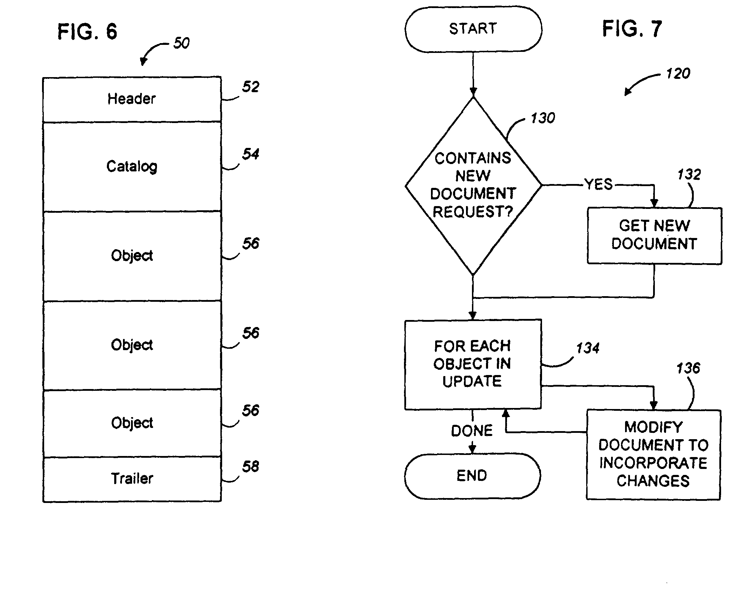

Referring to Figure 6, an update 50 includes a header 52, a catalog 54, objects 56, and a trailer 58. The header 52 includes a key that indicates that the response is an update. Not every object 56 in the update 50 need be modified; some objects may be present to provide the file structure required by format of the update. For each modified object, only the attributes that have been changed need be placed in the update. A update may contain instructions to modify the value of an object, the actions associated with an object, the visual attributes of an object (such as color, font, or visibility), the field attributes of an object (such as read-only status), or any other attribute. An update may also contain an instruction to add or delete an object.

Referring to Figure 7, in the step 120 (see also Figure 5) of importing an update into the electronic document, the viewer determines whether a new document is required by the update (step 130). Specifically, the viewer searches the catalog object of the update for a key identifying a file specification. If the catalog object contains such a key, then the file specification is compared to the file name of the electronic document that the program is displaying. If the two files names do not match, then the viewer fetches a new electronic document (step 132). The viewer may fetch the new document in any number of ways, such as by downloading the document over a communication link or by retrieving the document from a local storage device.

The viewer then examines each object in the update (step 134) and incorporates the changes for that object into the electronic document 22 (step 136).

To modify a field object, the viewer generates a list of the fully qualified field names for the objects in the update. Specifically, the partial field name of each object is concatenated with the partial field names of each ancestor of the field object. Each fully qualified field name in the list is matched with the identical fully qualified name in the electronic document. The object in the electronic document having the identical fully qualified field name may be located by searching through the field hierarchy. If the update contains fields that are not present in the electronic document, then the extra fields are ignored.

For each matched pair of objects in the update and the electronic document, the viewer searches for listed attribute keys in each object. For each attribute key in the object in the update, the viewer replaces the value of the corresponding attribute key in the field in the electronic document with the value from the object.

Returning to Figure 5, a server program or process will receive the request from the viewer (step 122). In response, if appropriate, the server will generate an update (step 124), and send the update to the viewer (step 126). A script, written by an author, controls the response of the server to the request. Thus, by designing a form and a script, the author may create an interactive application. Because the update contains instructions for modifying only the changed portions of the document, the application has advantages of low bandwidth and low processing costs.

Several examples of the process 100 will now be described with reference to Figure 2. In a first example, the form 40 changes to acknowledge the receipt by the server of information from the viewer. The user enters his or her name into fields 42a-42c of the form 40. Then the user clicks the submit button 44 to trigger a submit form action. The viewer then sends a request to the server. The request contains the values for each field 42. In response, the server generates an update. The update modifies the color attributes of the name fields 42a-42c to acknowledge receipt of the submitted information. The update may also modify the color attributes of the other fields 42d-42h to remind the user to complete the form. Alternately, the color attribute could be used to indicate whether the server found a match in a database for the entered name. For example, if the name was found in the database then the name fields 42a-42c could be given a green background, whereas if the name was not found, then the name fields 42a-42c could be given a red background.

In a second example, the update 50 modifies the form 40 to modify the actions generated by the electronic document in response to gestures by the user. In this example, the user presses button 44 to generate a submit form action. In response, the update assigns a reset form action to button 44 so that the user may clear the entries in fields 42.

Other changes may be made that do not involve modifications of the appearance of the electronic document. For example, one or more fields 42 may be changed to a read-only status so that the user may not change the information.

Using these techniques, a server may make an essentially unlimited number of changes to the appearance and functions of a simple button in the course of interaction with a user.

In addition, objects may be made to appear and disappear from the form 40. It may be noted that two approaches are available for causing an object to appear or disappear. The first approach is to add an object to or delete an object from the electronic document. The second approach is to change an attribute of an object that already exists in the electronic document so that the object becomes hidden or revealed. In general, the second approach has the advantage of minimizing alterations to the data structure of the electronic document.

For example, the selection of credit card as a payment type may cause credit card fields 42l-42q to appear. The form 40 may define clicking on checkboxes 42j or 42k as a gesture that triggers a hide action. The hide action causes the viewer to initiate a request to the server. In response, the server generates an update to remove the hide flag from the fields 42l-42q.

In another embodiment, the viewer may send the request for service to a local process rather than a remote server. As an example, the incremental update may be used to fill out the form 40 locally. A user who anticipates receiving several forms that request personal information may generate a locally stored update. The update contains personal information, such as the user's name, address and social security number. The user may store the update on the storage device 16 (Figure 1). The author may provide the form 40 with a personal information button 46. The user may click on the personal information button 46 to trigger an import action. This causes the viewer to import the local update into the electronic document and complete the form 40.

In another embodiment, the viewer may initiate a request without action by the user. For example, a viewer may include a timer. At the expiration of the timer, the viewer may automatically initiate a request for service.

In another embodiment, the viewer may receive an update without initiating a request. For example, a viewer may download a document with stock quote fields from a server. The server may then regularly transmit an update to modify the stock quote field values.

While this invention has been described in terms of several particular embodiments, other embodiments are within the scope of the claims.

## Claims

1. A computer-implemented method redefining an electronic document displayed to a user by a viewer running on a computer, comprising:
displaying an electronic document having information content and formatting information defining a predetermined final format for the appearance of the document when displayed, the document having one or more fields;
receiving an update to the electronic document in response to a request initiated at the viewer, the update including data for modifying one or more fields in the electronic document;
importing the update to redefine the electronic document; and
displaying the redefined document.

2. The method of claim 1 where the update comprises a redefinition of information content of the electronic document.

3. The method of claim 1 where the update comprises a redefinition of formatting information of the electronic document.

4. The method of claim 1 where:
the request is directed to a server; and
the server generates the update in response to the request and transmits the update to the viewer.

5. The method of claim 1 where:
the request is directed to a process running on the computer with the viewer; and
the process generates the update in response to the request and provides the update to the viewer.

6. The method of claim 1 further comprising:
receiving from a user input data for one or more fields of the electronic document;
redefining the electronic document to include the input data as field values; and
including the input data in the request.

7. The method of claim 1 further comprising:
receiving from a user a user interface gesture initiating the request.

8. The method of claim 1 where the data in the update includes data of one or more types, the types selected from the group consisting of data to modify an existing field in the electronic document, data to add a field to the electronic document, and data to delete a field from the electronic document.

9. The method of claim 1 where an attribute is associated with a field, and the data in the update changes the attribute.

10. The method of claim 9 where the attribute is selected from the group consisting of value, visual appearance, action and position.

11. The method of claim 1 where the data in the update includes document description in the PDF document description language.

12. The method of claim 1 where the data in the update modifies less than all of the fields of the electronic document.

13. The method of claim 1 where the electronic document is a fully self-contained definition of its information content and appearance.

14. A computer-implemented method providing services to a user through an electronic document, comprising:
transmitting an electronic document to a viewer running on a computer for display to a user, the electronic document having information content and formatting information defining a predetermined final format for the appearance of the document when displayed;
receiving a request;
generating an update to the electronic document in response to the request; and
transmitting the update to the viewer, so that the viewer may import the update and display an updated document to the user.

15. The method of claim 13 where the update comprises a redefinition of information content of the electronic document.

16. The method of claim 13 where the update comprises a redefinition of formatting information of the electronic document.

17. The method of claim 13 where the update includes data modifying one or more fields of the electronic document.

18. The method of claim 13 where the update includes data modifying less than all of the fields of the electronic document.

19. The method of claim 13 where the update includes data modifying an action of a field of the electronic document.

20. The method of claim 13 where the update includes data modifying an annotation of a field of the electronic document.

21. The method of claim 13 where the electronic document is a fully self-contained definition of its information content and appearance.

22. A computer program, tangibly stored on a computer-readable medium, comprising instructions for causing a first, server computer to:
transmit an electronic document to a viewer running on a second, client computer for display to a user, the electronic document having information content and formatting information defining a predetermined final format for the appearance of the document when displayed;
receive a request from the viewer;
generate an update to the electronic document in response to the request; and
transmit the update to the viewer, so that the viewer may import the update and display an updated document to the user.

23. The computer program of claim 20 where the update comprises a redefinition of information content of the electronic document.

24. The computer program of claim 20 where the update comprises a redefinition of formatting information of the electronic document.

25. The computer program of claim 20 where the update includes data modifying one or more fields of the electronic document.

26. The computer program of claim 20 where the update includes data modifying less than all of the fields of the electronic document.

27. The computer program of claim 20 where the update includes data modifying an action of a field of the electronic document.

28. The computer program of claim 20 where the update includes data modifying an annotation of a field of the electronic document.
